(19) Europäisches Patentamt

European Patent Office

Office européen des brevets

(11) **EP 0 626 297 B1**

(12) **EUROPÄISCHE PATENTSCHRIFT**

(45) Veröffentlichungstag und Bekanntmachung des Hinweises auf die Patenterteilung:
**24.07.1996 Patentblatt 1996/30**

(51) Int. Cl.$^6$: **B60T 13/66**, B60T 17/22

(21) Anmeldenummer: **94104779.7**

(22) Anmeldetag: **25.03.1994**

(54) **Verfahren zur Einstellung eines Bremswertes auf einen Soll-Bremswert**

Adjusting method for a brake value on a target value

Procédé d'ajustement d'une valeur de freinage à une valeur préscrite

(84) Benannte Vertragsstaaten:
**DE FR GB IT SE**

(30) Priorität: **28.05.1993 DE 4317846**

(43) Veröffentlichungstag der Anmeldung:
**30.11.1994 Patentblatt 1994/48**

(73) Patentinhaber: **WABCO GmbH**
**D-30453 Hannover (DE)**

(72) Erfinder: **Eckert, H.**
**D-31547 Rehburg-Loccum (DE)**

(74) Vertreter: **Schrödter, Manfred, Dipl.-Ing.**
**WABCO Standard GmbH**
**Postfach 91 12 80**
**D-30432 Hannover (DE)**

(56) Entgegenhaltungen:
**EP-A- 0 233 360         EP-A- 0 445 575**
**DE-A- 3 502 825**

 • **PATENT ABSTRACTS OF JAPAN vol. 8, no. 234 (M-334) 26. Oktober 1984 & JP-A-59 114 152 (NIPPON AIR BRAKE KK)**

**Beschreibung**

Die Erfindung betrifft ein Verfahren zur Einstellung eines Bremswertes aus einen Soll-Bremswert gemäß dem Oberbegriff des Patentanspruchs 1 und eine Bremsanlage zur Durchführung des Verfahrens.

Die Begriffe "Einstellung des Bremswertes", "Verschwinden der Abweichung" und inhaltsgleiche Begriffe sollen im folgenden stets im Rahmen der in der Praxis unvermeidbaren Toleranzen verstanden werden.

Das Anwendungsgebiet der Erfindung bilden die Bremsanlagen, die jeweils gemeinsam mit dem gebremsten Gegenstand einen Regelkreis mit dem Bremswert als geregelter Größe und der Zuspannenergie als Stellgröße bilden. Einer solchen Bremsanlage wird durch Zuführung einer soll-Bremswertanforderung ein Soll-Bremswert abverlangt. Die Bremsanlage ist bestrebt, durch entsprechende Einstellung und Variation der Zuspannenergie selbsttätig die Soll-Bremswertanforderung zu erfüllen.

In der EP-A-0 233 360 ist für eine Bremsanlage, in der die Zuspannenergie auf einen Sollwert einzustellen ist, ein Verfahren angegeben, die Hysterese eines z. B. als Magnetventil ausgebildeten Stellglieds mit stromproportionaler Stellkennlinie zu kompensieren. Dieser Stand der Technik sieht eine Regelelektronik vor, in der die Kennlinien des Stellglieds für Zuspannenergiezufuhr und Zuspannenergieabfuhr durch eingespeicherte Regressionsgeraden ersetzt sind. Ferner ist in der Regelelektronik eine sich aus dem Verlauf der Mittelwerte der Regressionsgraden ergebende Haltegerade eingespeichert. Bei einer Stellgliedbetätigung steuert die Regelelektronik die Stromzufuhr zu dem Stellglied, je nach Größe und Richtung der Abweichung der Ist-Zuspannenergie von ihrem Sollwert, gemäß der Haltegeraden oder einer der Regressionsgeraden.

Ein Verfahren der eingangs genannten Art ist aus der DE 35 02 825 A1 bekannt.

Die im Oberbegriff des Patentanspruchs 1 erwähnte Bremse erzeugt bei Zuführung von Zuspannenergie eine Bremskraft. Der von der Bremsanlage erzeugte Bremswert ist eine Größe, die von der Bremskraft der Bremse abhängt. Der Bremswert hängt ausschließlich von der genannten Bremskraft ab, wenn diese selbst den Bremswert darstellt. Überwiegend wird aber der Bremswert außer durch die Bremskraft der Bremse durch Parameter des gebremsten Gegenstands bestimmt. In der Fahrzeugtechnik - siehe auch die oben erwähnte DE 35 02 825 A1 - sind beispielsweise als Bremswert die Bremskraft zwischen Rad und Straße sowie die Fahrzeugverzögerung gebräuchlich. Dabei bestimmen in bekannter Weise Abmessungen des Fahrzeugs bzw. von Fahrzeugteilen bzw. das Fahrzeuggewicht den Bremswert mit.

Für die Abhängigkeit zwischen Zuspannenergie und Bremswert gilt in allgemeiner Form die Beziehung

$$B = F \cdot M \cdot C \cdot Z \qquad\qquad (I).$$

Darin bedeuten

B   den Bremswert,
Z   die Zuspannenergie,
C   ein die Bremscharakteristik inklusive etwaiger Übersetzungsverhältnisse kennzeichnender Koeffizient,
F   ein das Gewicht des gebremsten Gegenstands kennzeichnender Koeffizient,
M   ein bremsrelevante Abmessungen des gebremsten Gegenstands kennzeichnender Koeffizient.

Je nach Art des gewählten Bremswertes können ein oder mehrere der Koeffizienten C, F und M konstant oder variabel sein. Dient beispielsweise in der Fahrzeugtechnik die Fahrzeugverzögerung als Bremswert, so ist F variabel.

Andererseits können je nach Art des gewählten Bremswertes ein oder mehrere der Koeffizienten C, F und M bedeutungslos und =1 zu setzen sein. Dies gilt beispielsweise für F in der Fahrzeugtechnik, wenn als Bremswert die Bremskraft zwischen Rad und Straße dient.

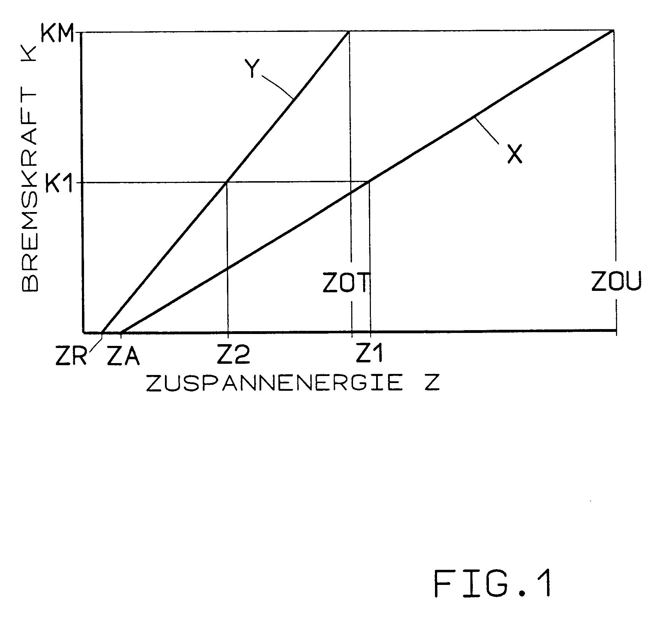

Wie das schematische Bremskraft-Zuspannenergie-Kennfeld gemäß Fig. 1 veranschaulicht, weist die Bremse aufgrund ihrer Hysterese unterschiedlich verlaufende Kennlinien der abgegebenen Bremskraft (K) als Funktion der Zuspannenergie (Z) für die Bremsbetätigung und für das Bremslösen auf. Bei einer Bremsbetätigung, d. h. bei steigender bzw. gleichbleibender Zuspannenergie (Z) nach einem Anstieg derselben, verläuft die Bremskraft (K) von einem zur Überwindung der Ansprechwiderstände erforderlichen Zuspannenergiewert ZA ab gemäß der Kennlinie (X). Bei dem durch den Energievorrat der Bremsanlage bestimmten Höchstwert ZOU der Zuspannenergie (Z) gibt die Bremse die größtmögliche Bremskraft KM ab. Bei einem Bremslösen, d. h. bei einem Abfall der Zuspannenergie (Z) bzw. bei gleichbleibender Zuspannenergie (Z) nach einem Abfall derselben, gibt die Bremse weiter die Bremskraft KM ab, bis die Zuspannenergie (Z) auf einen Wert ZOT gefallen ist. Erst bei einem weiteren Abfall der Zuspannenergie (Z) fällt auch die Bremskraft (K) ab, und zwar gemäß der Kennlinie (Y). Analog verhält sich die Bremse bei einer geringeren Zuspannenergie (Z) und einer entsprechenden Bremskraft (K). Beispielsweise beginnt, ausgehend von einem Punkt mit den Koordinaten "Zuspannenergie Z1" und "Bremskraft K1", der Bremskraftabfall erst nach einem Abfall der Zuspannenergie auf einen Wert Z2. Die jeder Bremskraft (K) zugeordnete Differenz der Zuspannenergie (Z) zwischen den Kennlinien (X, Y) ist die jeweilige Hysterese, die Fläche zwischen den Kennlinien (X, Y) ist das Hysteresefeld.

Wegen der Ansprechwiderstände wird beim Bremslösen die Bremskraft (K) schon bei einer Rest-Zuspannenergie ZR zu Null.

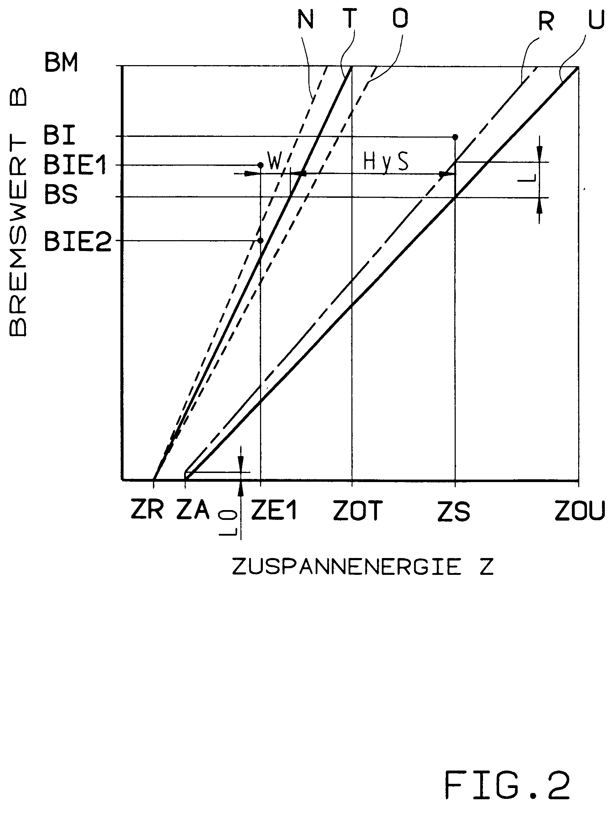

Diese Eigenschaft der Bremse wirkt sich auf die Bremsanlage dahin aus, daß der von dieser erzeugte Bremswert (B) als Funktion der Zuspannenergie (Z) ebenfalls nach unterschiedlichen Kennlinien für die Bremsbetätigung und das Bremslösen verläuft. Dies veranschaulicht Fig. 2 mit den entsprechenden Kennlinien (U) und (T). In diesem Kennfeld stellen die Differenz der Zuspannenergie (Z) zwischen den Kennlinien (U, T) bzw. die Fläche zwischen den Kennlinien (U, T) die Hysterese (Hy) bzw. das Hysteresefeld der Bremsanlage dar. Analog zu Fig. 1 legen die Zuspannenergiewerte ZA, ZR, ZOU und ZOT die Anfangs- bzw. Endpunkte der Kennlinien (U, T) fest. Ist die Bremsanlage beispielsweise bis zu einem Punkt mit den Koordinaten "Soll-Bremswert BS" und "zugeordnete Zuspannenergie ZS" betätigt und wird die Zuspannenergie (Z) verringert, so bedarf es - analog zu dem zu Fig. 1 Gesagten - der Überwindung der dem Soll-Bremswert BS zugeordneten Differenz der Zuspannenergie ZS zwischen den Kennlinien (U, T), d. h. der Hysterese HyS, bevor die Bremsanlage anspricht und den Bremswert (B) mindert.

Wegen der Hysterese gilt die oben angegebene Beziehung (I) nur bei der Bremsbetätigung, also bei steigender Zuspannenergie (Z) (d. h. unmittelbar nach einem Anstieg derselben), bzw. bei gleichbleibender Zuspannenergie (Z) nach einem Anstieg derselben.

Ausgehend von dem bei der Bremsbetätigung erreichten Bremswert (B) nach Beziehung (I) gilt für die Hysterese (Hy) die allgemeine Beziehung

$$Hy = ZA - ZR + (ZOU - ZOT - ZA + ZR) \cdot ((B/F \cdot M \cdot C) - ZA)/(ZOU - ZA) \qquad (II)$$

Die Hysterese ist nachteilig. Dies gilt auch, wenn sich bei einer Bremsbetätigung eine Abweichung des vorhandenen Ist-Bremswertes von dem verlangten Soll-Bremswert in Richtung höherer Bremswerte einstellt, mit anderen Worten: wenn der Ist-Bremswert zu groß wird. Zur Beseitigung der Abweichung kennt das bekannte Verfahren zwei Alternativen. In der ersten Alternative mindert das bekannte Verfahren die Zuspannenergie in Stufen, bis die Hysterese überwunden und die Abweichung verschwunden ist. In der zweiten Alternative mindert das bekannte Verfahren die Zuspannenergie in einem verhältnismäßig großen Sprung, der zu einem Unterschreiten des Soll-Bremswertes führt, und steigert die Zuspannenergie anschließend stufenweise wieder bis zum Erreichen des Soll-Bremswertes. Diese Maßnahmen sind mit einem sprunghaften Verlauf des Bremswertes verbunden, den der Bediener als unbefriedigende Regelgüte der Bremsanlage empfindet.

Der Erfindung liegt die Aufgabe zugrunde, ein Verfahren der eingangs genannten Art so zu verbessern, daß es den Verlauf des Bremswertes glättet.

Diese Aufgabe wird durch die in dem Patentanspruch 1 angegebene Erfindung gelöst. Vorteilhafte Fortbildungen sowie eine Bremsanlage zur Durchführung der Erfindung sind in den Unteransprüchen angegeben.

In der oben an zweiter Stelle genannten Alternative zur Beseitigung der genannten Abweichung kann das bekannte Verfahren einen erhöhten Energieverbrauch verursachen. Diesen Nachteil behebt die Erfindung.

Die Erfindung ist für alle technischen Gebiete, in denen die vorstehend und nachstehend erläuterten Probleme auftreten, und für jede Art von Zuspannenergie geeignet.

Ein wichtiges Einsatzgebiet der Erfindung sind Bremsanlagen in der Fahrzeugtechnik, in denen der Druck eines hydraulischen und/oder pneumatischen Druckmittels als Zuspannenergie eingesetzt wird, wobei als pneumatisches Druckmittel in der Regel Druckluft dient.

Weitere Vorteile der Erfindung werden in deren nunmehr folgender Erläuterung anhand zeichnerischer Darstellungen genannt. In den Zeichnungen zeigen

Fig. 1      schematisch ein Kennfeld einer Bremse,

Fig. 2      schematisch ein Kennfeld einer Bremsanlage,

sowie, mit durchgezogenen Linien für Energieleitungen und strichpunktierten Linien für Signalleitungen,

Fig. 3      schematisch eine Bremsanlage.

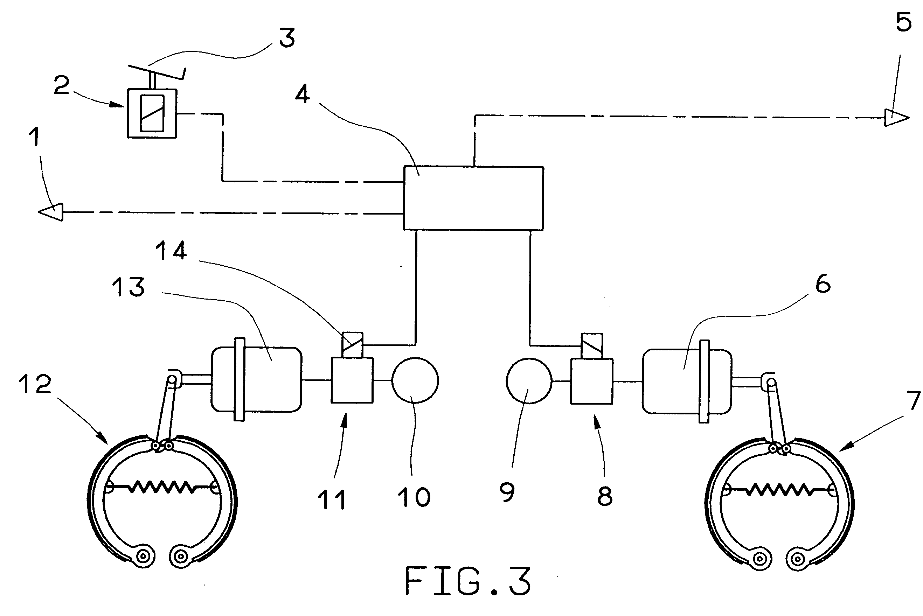

Die in Fig. 3 dargestellte elektrisch gesteuerte Bremsanlage, für deren Art die Kurzbezeichnung EBS gebräuchlich ist, besitzt in der Grundausführung eine durch Zufuhr von Zuspannenergie (Z) aus einem Energievorrat (10) betätigte Bremse (12, 13). Die Bremse (12, 13) besteht in üblicher Weise aus einem die Bremskraft erzeugenden Bremsapparat (12) und einer die Zuspannenergie (Z) empfangenden und in Zuspannkraft für den Bremsapparat (12) umformenden Zuspanneinrichtung (13) sowie zugehörigen Übertragungsteilen, die nicht näher bezeichnet sind.

Zur Einstellung der der Bremse (12, 13), genauer: der Zuspanneinrichtung (13), zugeführten Zuspannenergie (Z) ist der Bremse (12, 13) ein elektrisch gesteuerter Energieverteiler (11) zugeordnet. Dieser ist einerseits mit dem Energievorrat (10) und andererseits mit der Zuspanneinrichtung (13) und außerdem in nicht dargestellter Weise mit einer Energie-Entlastungseinrichtung verbunden. Bei Einsatz eines hydraulischen oder luftfremden Druckmittels ist die Energie-Entlastungseinrichtung ein Auffangbehälter, der üblicherweise dem Atmosphärendruck ausgesetzt ist. Beim Einsatz von Druckluft ist die Energie-Entlastungseinrichtung in der Regel die Atmosphäre.

Für den Energieverteiler (11) sind zwei Bauarten gebräuchlich. In der einen Bauart (Digitalbauart) erfordert die elektrische Steuereinrichtung (14) des Energieverteilers (11) ein jeweils festes Zuspannenergieaufbausignal, Zuspannenergiehaltesignal und Druckabbausignal. Solange die Steuereinrichtung (14) das Zuspannenergieaufbausignal empfängt, verbindet der Energieverteiler (11) den Energievorrat (10) mit der Zuspann-Einrichtung (13); solange die Steuereinrichtung (14) das Zuspannenergiehaltesignal empfängt, trennt der Energieverteiler (11) die Zuspanneinrichtung (13) von der Energie-Entlastungseinrichtung und von dem Energievorrat (10). Bei Empfang des Zuspannenergieabbausignals trennt der Energieverteiler (11) die Zuspanneinrichtung (13) von dem Energievorrat (10) und verbindet sie mit der Energie-Entlastungseinrichtung. In der anderen Bauart erfordert die elektrische Steuereinrichtung (14) des Energieverteilers (11) ein variables Zuspannenergiesignal. Bei Erhalt des Zuspannenergiesignals verbindet der Energieverteiler (11) die Zuspanneinrichtung (13) entweder mit dem Energievorrat (10) oder mit der Energie-Entlastungseinrichtung, bis sich in der Zuspanneinrichtung (13) die dem Zuspannenergiesignal entsprechende Zuspannenergie (Z) aufgebaut hat. Obwohl die Zuordnung zwischen Zuspannenergie (Z) und Zuspannenergiesignal nicht unbedingt linear sein muß, wird diese Bauart üblicherweise als "Proportionalbauart" bezeichnet. Beim Einsatz von Druck eines Druckmittels, z. B. Druckluft, als Zuspannenergie dienen als Energieverteiler in beiden Bauarten im allgemeinen Magnetventile.

Die Bremsanlage weist außerdem einen elektrischen Bremswertgeber (2), eine Regelelektronik (4) und einen Bremswertsensor (1) auf. Sind einer oder mehrere der gemäß Beziehung (I) in den Bremswert (B) eingehenden Parameter variabel, gehören zu der Bremsanlage ein oder mehrere weitere Sensoren, welche die betreffenden Parameter direkt oder indirekt erfassen. Ein solcher Sensor ist, soweit zutreffend stellvertretend für mehrere Sensoren, mit der Bezugsziffer (5) dargestellt.

Der Bremswertgeber (2) ist mittels eines Stellglieds (3), welches zeichnerisch als Pedal- oder Handhebel dargestellt ist, in der Lage, in Gestalt einer Stellgliedkraft und/oder eines Stellgliedwegs vom Bediener eine Soll-Bremswertaufforderung entgegenzunehmen und ein dieser entsprechendes Soll-Bremswertsignal abzugeben. Der Bremswertsensor (1) mißt den vorhandenen Ist-Bremswert BI und gibt ein entsprechendes Ist-Bremswertsignal ab. In vergleichbarer Weise wirken die etwa vorhandenen weiteren Sensoren wie der Sensor (5) in Bezug auf die jeweils von ihnen erfaßte Größe.

Der Bremswertgeber (2), der Bremswertsensor (1) und, gegebenenfalls, der Sensor (5) sind mit Eingängen der Regelelektronik (4) verbunden. Der Steuerteil (14) des Energieverteilers (11) ist in der Digitalbauart mit wenigstens zwei Ausgängen der Regelelektronik (4), in der Proportionalbauart mit einem Ausgang der Regelelektronik (4) verbunden.

In der Regelelektronik (4) sind alle zur Durchführung der nachstehend beschriebenen Funktionen einschließlich der zugehörigen Speicherungen erforderlichen elektronischen Bauelemente vorgesehen und zweckentsprechend programmiert.

Die Regelelektronik (4) kann in üblicher Weise mit anderen elektronischen Baugruppen wie beispielsweise einer Blockierschutzelektronik baulich und/oder schaltungsmäßig zusammengefaßt sein.

Die Funktionsweise der Bremsanlage wird nunmehr mit Hilfe der Fig. 1 und 2 unter Zugrundelegung eines Energieverteilers (11) der Proportionalbauart erläutert.

Der Bediener betätigt die Bremsanlage, indem er mittels des Stellglieds (3) auf den Bremswertgeber (2) einwirkt. Die Regelelektronik (4) schaltet sich bei Empfang des dadurch hervorgerufenen Soll-Bremswertsignals ein und beim Erlöschen des Soll-Bremswertsignals aus. Während ihrer Einschaltdauer fragt die Regelelektronik (4) mit ihrer Umlauffrequenz das Soll-Bremswertsignal ab und vergleicht das jeweils ermittelte Soll-Bremswertsignal mit dem bei dem vorangegangenen Umlauf ermittelten, so daß die Regelelektronik (4) stets darüber informiert ist, ob das Soll-Bremswertsignal steigt, gleich bleibt oder fällt. Aus dem Nachstehenden geht hervor, daß die Zuspannenergie dem Soll-Bremswertsignal folgt. Die Information über den Verlauf des Soll-Bremswertsignals liefert folglich die Aussage, ob gerade eine Bremsbetätigung oder ein Bremslösen stattfindet. Alternativ kann die Regelelektronik (4) so ausgebildet sein, daß sie von Umlauf zu Umlauf das im Folgenden beschriebene Zuspannenergiesignal vergleicht und die Aussage über Bremsbetätigung bzw. Bremslösens aus dem Verlauf dieses Signals gewinnt.

Aus dem Soll-Bremswertsignal und, gegebenenfalls, dem Signal das Sensors (5) berechnet die Regelelektronik (4) anhand der weiter oben angegebenen Beziehung (I) ein Zuspannenergiesignal, welches der dem Soll-Bremswert BS zugeordneten Zuspannenergie ZS entspricht, und gibt dieses an den Energieverteiler (11) ab. Dieser verbindet daraufhin die Zuspanneinrichtung (13) mit dem Energievorrat (10), bis sich in der Zuspanneinrichtung (13) die dem Soll-Bremswert BS zugeordnete Zuspannenergie ZS aufgebaut hat. Bei fallendem Soll-Bremswertsignal und einer entsprechenden Minderung des Zuspannenergiesignals verbindet der Energieverteiler (11) die Zuspanneinrichtung (13) mit der Energie-Entlastungseinrichtung, bis der entsprechende Abfall der Zuspannenergie in der Zuspanneinrichtung (13) eingetreten ist.

Die Regelelektronik (4) fragt bei jedem Umlauf auch den Bremswertsensor (1) ab und vergleicht dessen Ist-Bremswertsignal mit dem Soll-Bremswertsignal. Stellt die Regelelektronik bei einer Bremsbetätigung, also nach einem Anstieg des Soll-Bremswertsignals oder bei gleichbleibendem Soll-Bremswertsignal nach einem Anstieg desselben eine Abweichung des Ist-Bremswertsignals von dem Soll-Bremswertsignal und damit eine Abweichung (BI-BS) des Ist-Bremswerts BI von dem Soll-Bremswert BS in Richtung höherer Bremswerte (B) fest, ist also der Ist-Bremswert BI zu groß, so berechnet sie anhand der weiter oben angegebenen Beziehung (II) die dem Soll-Bremswert BS zugeordnete Hysterese HyS und mindert das Zuspannenergiesignal um einen Wert, der einer Minderung der vorhandenen Zuspannenergie ZS um einen Wert (HyS+W) entspricht, der sich aus der soeben erwähnten Hysterese HyS und einer als Wirkabfall zu bezeichnenden Größe W ergibt.

Je nach spezieller Ausgestaltung der Regelelektronik (4) kann der Wirkabfall W einen festen Wert haben oder von der Größe der vorhandenen Abweichung (BI-BS) des Ist-Bremswerts BI vom Soll-Bremswert BS abhängen. Er kann außerdem von der dem Soll-Bremswert BS zugeordneten Hysterese HyS abhängen. Hat der Wirkabfall W den festen Wert, liest die Regelelektronik (4) ihn aus einem Speicher.

Hängt der Wirkabfall W von der Größe der Abweichung (BI-BS) und der genannten Hysterese HyS ab, so berechnet ihn die Regelelektronik (4) anhand der Beziehung

$$W = ((BS/F \cdot M \cdot C)\text{-}ZA) \cdot (BI\text{-}BS) \cdot ((BS/F \cdot M \cdot C)\text{-}HyS\text{-}ZR)/BS \cdot ((BS/F \cdot M \cdot C)\text{-}ZA) \qquad \text{(III)}.$$

Diese Minderung des Zuspannenergiesignals führt zu einem Abfall der von der Bremse (12, 13) erzeugten Bremskraft auf einen dem Wirkabfall W gemäß der Kennlinie (Y) für das Bremslösen in Fig. 1 zugeordneten Wert und dadurch in der Regel zum Verschwinden der Abweichung (BI-BS).

In einer alternativen Ausgestaltung kann die Regelelektronik (4) die Hysterese HyS auch direkt im Anschluß an die Berechnung des Zuspannenergiesignals berechnen und bis zum etwaigen Auftreten eines zu großen Ist-Bremswertes BI zwischenspeichern.

Nun kann es gelegentlich vorkommen, daß die soeben beschriebene Minderung der Zuspannenergie (Z) nicht zum Verschwinden, sondern nur zur Verringerung der ursprünglichen Abweichung (BI-BS) auf eine Restabweichung (BIE1-BS) führt. Für diesen Fall kann die Regelelektronik (4) so ausgebildet sein, daß sie während ihrer Einschaltdauer, also während des laufenden Bremsvorgangs, das Zuspannenergiesignal nach Bedarf in einer Stufe oder in mehreren Stufen bis zum Verschwinden auch der Restabweichung (BIE1-BS) weiter mindert. Dabei kann die einzelne Stufe einen festen eingespeicherten Wert haben, der kleiner als der Wirkabfall W sein muß. Die Regelelektronik (4) kann aber auch so ausgebildet sein, daß sie die Größe der Stufe nach der Beziehung

$$\text{Stufe} = (BIE1\text{-}BS) \cdot ((BS/F \cdot M \cdot C)\text{-}HyS\text{-}ZR)/BS \qquad \text{(IV)}$$

berechnet.

Eine Bremsanlage, die jedesmal wenn der Ist-Bremswert zu groß wird, wie vorstehend beschrieben reagiert, kann in der Praxis als ungleichmäßig arbeitend und dadurch unkomfortabel empfunden werden. Für solche Fälle kann die Bremsanlage so fortgebildet werden, daß die Regelelektronik (4) auf das Vorliegen einer Abweichung (BI-BS) der in Rede stehenden Art erst erkennt, wenn diese Abweichung (BI-BS) einen vorbestimmten Schwellwert L erreicht. Dieser Schwellwert L kann über den gesamten möglichen Zuspannenergiebereich eine konstante Größe haben, die in der Regelelektronik (4) gespeichert ist. Die Größe des Schwellwerts L kann aber auch von der Größe des Soll-Bremswertes BS abhängen; in diesem Fall berechnet die Regelelektronik (4) den Schwellwert L gleichzeitig mit dem Zuspannenergiesignal. Ein Schwellwertverlauf mit der zuletzt genannten Charakteristik ist als gestrichelte Linie (R) in Fig. 2 eingetragen. Die jeweilige Differenz parallel zur Ordinate zwischen der Kennlinie (U) für die Bremsbetätigung und der Linie (R) gibt für jeden Bremswert (B) den zugeordneten Schwellwert L an. Bei dieser Fortbildung berechnet die Regelelektronik (4) zusätzlich anhand der Beziehung

$$L = LF \cdot B + LO \qquad \text{(V)}$$

die Größe des Schwellwertes L zu jedem Bremswert (B). In Beziehung (V) sind LF ein Schwellwertfaktor und LO ein Anfangsschwellwert. Der Schwellwertfaktor LF kann beispielsweise zwischen 0,002 und 0,1 betragen. Der Anfangsschwellwert LO stellt sicher, daß auch im Bereich geringer (Soll-) Bremswerte ein definierter Schwellwert vorhanden ist und eine "flatternde" Arbeitsweise der Bremsanlage in diesem Bereich vermieden wird. Der Anfangsschwellwert LO kann beispielsweise

$$LO = (O,02.......0,1) \cdot BM \qquad \text{(VI)}$$

betragen. Zum besseren Verständnis ist die Linie (R) so eingetragen, daß der jeweilige Schwellwert L unverhältnismäßig groß erscheint.

Bei dieser Fortbildung nimmt die Regelelektronik (4) die Minderung des Zuspannenergiesignals um den der oben genannten Minderung (HyS+W) der vorhandenen Zuspannenergie ZS entsprechenden Wert erst vor, wenn die in Rede stehende Abweichung (BI-BS) die Größe des jeweiligen Schwellwertes L erreicht.

In dieser Fortbildung kann die Regelelektronik (4) auch so ausgebildet sein, daß sie im Bereich großer Bremswerte (B) die Anwendung des Schwellwertes L unterläßt. In diesem Vollbremsbereich geht es um größtmögliche Bremswirkung, wobei eine gleichmäßige und komfortable Arbeit der Bremsanlage von untergeordneter Bedeutung ist.

Von den in die oben angegebene Beziehung (II) eingehenden Größen werden ZA, ZR und ZOT in Untersuchungen mit einer oder mehreren konkreten Bremsen ermittelt. Von der nach der Beziehung (II) berechneten Hysterese, die nachstehend "theoretisch" genannt wird, kann die im Einsatz auftretende reale Hysterese aus verschiedenen Gründen abweichen. Solche Gründe können betriebs-, wartungs- oder altersbedingte Veränderungen in der Bremsanlage, speziell in der Bremse, aber auch unvermeidliche Qualitätsstreuungen aus der Serienfertigung der Komponenten der Bremsanlage, insbesondere der Bremse (12, 13), sein. Von den betriebsbedingten Einflüssen sei insbesondere der thermische Zustand der Bremse (12, 13) hervorgehoben.

In Fig. 2 sind gestrichelt zwei Linien (N und O) eingetragen. Die Linie (N) repräsentiert einen Fall, in dem die reale Hysterese größer als die theoretische ist. In diesem Beispiel hat sich die Kennlinie (T) für das Bremslösen auf die Linie (N) verschwenkt. Die Linie (O) repräsentiert einen Fall, in dem die reale Hysterese kleiner als die theoretische ist. In diesem Beispiel hat sich die Kennlinie (T) für das Bremslösen auf die Linie (O) verschwenkt.

Im Falle größerer realer als theoretischer Hysterese führt die Minderung der dem Soll-Bremswert BS zugeordneten Zuspannenergie ZS um den Wert (HyS+W) zu der weiter oben abgehandelten Restabweichung (BIE1-BS). Bei sehr viel größerer realer als theoretischer Hysterese können der neue Bremswert BIE1 gleich dem ursprünglichen Ist-Bremswert BI und die Restabweichung (BIE1-BS) gleich der ursprünglichen Abweichung (BI-BS) sein.

Im Falle kleinerer realer als theoretischer Hysterese unterschreitet der sich nach einer Minderung der vorhandenen Zuspannenergie ZS um den Wert (HyS + W) einstellende Ist-Bremswert BIE2 den Soll-Bremswert BS, weicht also von diesem in Richtung geringerer Bremswerte (B) ab, so daß nach der Minderung der Zuspannenergie ZS um den Wert (HyS + W) eine neue Abweichung (BS-BIE2) vorliegt.

Die Regelelektronik (4) kann so fortgebildet sein, daß sie die Bremsanlage an die jeweilige reale Hysterese adaptiert.

Zu diesem Zweck kann die Regelelektronik (4) für den Fall größerer realer als theoretischer Hysterese so ausgebildet sein, daß sie wie beim oben abgehandelten Fall des Auftretens einer Restabweichung (BIE1-BS) während ihrer Einschaltdauer, also während des laufenden Bremsvorgangs, das Zuspannenergiesignal in einer oder mehreren Stufen bis zum Verschwinden der Abweichung (BI-BS) weiter mindert. Allerdings kann diesem Fall bei sehr viel größerer realer als theoretischer Hysterese die einzelne Stufe die Größe des Wirkabfalls W haben oder sogar größer als dieser sein. Für den Fall kleinerer realer als theoretischer Hysterese kann zum gleichen Zweck die Regelelektronik (4) so ausgebildet sein, daß sie während ihrer Einschaltdauer, also während des laufenden Bremsvorgangs, die Zuspannenergie in einer oder mehreren Stufen bis zum Verschwinden der Abweichung (BS-BIE2) wieder steigert, wobei für die Größe des einzelnen Schrittes das oben Gesagte entsprechend gilt. Zur Beschleunigung der Adaption kann sie dabei die erste Stufe entsprechend der dem neuen Ist-Bremswert BIE2 zugeordneten Hysterese bemessen.

Die Regelelektronik (4) kann auch so fortgebildet sein, daß sie die Bremsanlage anhand der bei einem Bremsvorgang gemachten Erfahrung für weitere Bremsvorgänge vorausschauend an die jeweilige reale Hysterese adaptiert.

Stellt in dieser Fortbildung die Regelelektronik (4) in einem Bremsvorgang nach einer Minderung der ursprünglich vorhandenen Zuspannenergie ZS fest, daß eine Restabweichung (BIE1-BS) vorhanden ist (reale Hysterese größer als theoretische), so vergrößert sie die anhand der Beziehung (II) berechnete Hysterese HyS um einen Korrekturwert G und speichert die so gewonnene neue Hysterese HyG. Tritt dann in einem folgenden Bremsvorgang nach einem Anstieg der Zuspannenergie (Z) eine Abweichung (BI-BS) der ursprünglichen Art auf, so berechnet die Regelelektronik (4) den Wert, um den die vorhandene Zuspannenergie ZS zu mindern ist, mit der gespeicherten neuen Hysterese HyG, so daß dieser Wert dann (HyG + W) beträgt, und bemißt das Zuspannenergiesignal dementsprechend. Die Regelelektronik (4) kann noch so fortgebildet sein, daß sie, wenn nach Minderung der Zuspannenergie ZS um den Wert (HyG + W) in diesem Bremsvorgang noch immer eine Restabweichung (BIE1-BS) vorhanden ist, die Berechnung, Speicherung und Anwendung des Korrekturwertes G entsprechend dem vorstehend Gesagten in diesem Bremsvorgang für einen bzw. in einem weiteren Bremsvorgang und, wenn erforderlich, für weitere bzw. in weiteren Bremsvorgängen, in denen eine Restabweichung (BIE1-BS) auftritt, bis zum Verschwinden dieser Abweichung und damit bis zur Einstellung des jeweiligen Soll-Bremswertes BS wiederholt.

Stellt die Regelelektronik (4) in ihrer Fortbildung zur vorausschauenden Adaption der Bremsanlage an die jeweilige reale Hysterese in einem Bremsvorgang nach einer Minderung der ursprünglich vorhandenen Zuspannenergie ZS um den Wert (HyS+W) fest, daß der Ist-Bremswert BIE2 den Soll-Bremswert BS unterschreitet, daß also eine neue Abweichung (BS-BIE2) vorliegt (reale Hysterese kleiner als theoretische), so mindert sie die anhand der Beziehung (II) berechnete Hysterese HyS um einen Korrekturwert V und speichert die so gewonnene neue Hysterese HyV. Tritt dann in einem folgenden Bremsvorgang nach einem Anstieg der Zuspannenergie (Z) eine Abweichung (BI-BS) der ursprünglichen Art auf, so berechnet die Regelelektronik (4) den Wert, um den die vorhandene Zuspannenergie ZS zu mindern ist, mit der gespeicherten neuen Hysterese HyV, so daß dieser Wert dann (HyV+W) beträgt, und bemißt das Zuspannenergiesignal dementsprechend. Die Regelelektronik (4) kann noch so fortgebildet sein, daß sie, wenn nach Minderung der Zuspannenergie ZS um den Wert (HyV+W) in diesem Bremsvorgang wieder eine Abweichung (BS-BIE2) der soeben genannten Art auftritt, die Berechnung, Speicherung und Anwendung des Korrekturwertes V entsprechend dem vorstehend Gesagten für einen bzw. in einem weiteren Bremsvorgang und, wenn erforderlich, für weitere bzw. in weiteren Bremsvorgängen, in denen eine Abweichung (BS-BIE2) der neuen Art auftritt, bis zum Verschwinden dieser Abweichung und damit bis zur Einstellung des jeweiligen Soll-Bremswertes BS wiederholt.

Die Korrekturwerte G und V können Additionswerte oder Multiplikatoren sein. Ihre Größe richtet sich nach den in der Praxis auftretenden Abweichungen der realen Hysteresen von der theoretischen Hysterese. In dem Falle, daß der Korrekturwert V ein Multiplikator ist, wird dieser vorteilhaft von dem Verhältnis des durch die Minderung der vorhandenen Zuspannenergie ZS um den Wert (HyS + W) erreichten Ist-Bremswertes BIE2 zu dem Soll-Bremswert BS gebildet, also

$$V = BIE2/BS \qquad\qquad (VII).$$

Entsprechend wird in dem Falle, daß der Korrekturwert G ein Multiplikator ist, dieser vorteilhaft von dem Verhältnis des durch die Minderung der vorhandenen Zuspannenergie ZS um den Wert (HyS+W) erreichten Ist-Bremswertes BIE1 zu dem Soll-Bremswert BS gebildet, also

$$G = BIE1/BS \qquad\qquad (VIII).$$

In der Praxis wird die Größe dieser Korrekturwerte so liegen, daß sie zu einer Vergrößerung bzw. Verkleinerung der Hysterese HyS um bis zu 60 % führen.

Bei realen Bremsanlagen folgt wegen der unvermeidlichen Ansprechverzögerungen und des Zeitbedarfs einer Änderung der Zuspannenergie im Normalfall der Bremswert (B) einer Änderung des Zuspannenergiesignals zeitlich verzögert.

Es ist deshalb zweckmäßig, die Regelelektronik (4) so auszubilden, daß sie die beschriebenen schrittweisen Anpassungen des Zuspannenergiesignals in dem laufenden Bremsvorgang bzw. die Bildung der neuen Hysteresen (HyG) bzw. (HyV) erst vornimmt, wenn die Reaktion der Bremsanlage auf die Änderung der Zuspannenergie (Z) abgeschlossen ist. Dies ist der Fall, wenn die Regelelektronik (4) nach einer Änderung des Zuspannenergiesignals von einem Umlauf zum nächsten Umlauf keine Änderung des Bremswertes (B) mehr feststellt.

Die vorstehend beschriebenen Fortbildungen der Regelelektronik (4) zur Adaption der Bremsanlage an die jeweilige reale Hysterese sind ausführbar sowohl bei der Grundausführung der Bremsanlage, die auf jede Abweichung (BI-BS) der in Rede stehenden Art des Ist-Bremswertes (BI) von dem Soll-Bremswert (BS) reagiert, als auch bei der Fortbildung, die erst nach Erreichen des Schwellwertes L auf das Vorliegen einer solchen Abweichung (BI-BS) erkennt.

Im Falle eines Energieverteilers (11) der Digitalbauart bildet die Regelelektronik (4) das Zuspannenergiesignal intern, vergleicht dieses mit dem Signal eines die Zuspannenergie erfassenden Sensors und gibt entsprechend dem Ergebnis des Vergleichs anstelle des vorstehend erwähnten variablen Zuspannenergiesignals das Zuspannenergieaufbausignal bzw. das Zuspannenergiehaltesignal bzw. das Zuspannenergieabbausignal an die Steuereinrichtung (14) des Energieverteilers (11) ab.

In vielen technischen Gebieten sind Bremsanlagen mit mehrere Bremsen inklusive ihrer zugeordneten Komponenten gebräuchlich. Die bisher erwähnte Bremse (12, 13) kann deshalb stellvertretend für mehrere Bremsen stehen. Es ist auch üblich, anderen Bremsen einen eigenen Energievorrat und einen eigenen Energieverteiler zuzuordnen. Ein Beispiel für einen solchen Fall bilden die zusätzlich dargestellte Bremse (6, 7), ihr Energievorrat (9) und ihr Energieverteiler (8). Auch die Bremse (6, 7) kann stellvertretend für mehrere Bremsen stehen. Es ist üblich, die aus einem Energievorrat beaufschlagten Bremsen und ihre Energieverteiler mit dem Sammelbegriff Bremskreis zu belegen. In der Fahrzeugtechnik ist es beispielsweise üblich, entweder jeder Fahrzeugachse einem Bremskreis zuzuordnen oder den Bremskreis auf mehrere Fahrzeugachsen aufzuteilen, in welchem Fall von Diagonalaufteilung gesprochen wird.

Liegt einer der Fälle vor, in denen die Bremsanlage mehrere Energieverteiler aufweist, kann die Regelelektronik (4) in Kanäle aufgeteilt sein, in denen sie die Beziehungen (I) bis (VIII) unterschiedlich verarbeitet und die Minderung der Zuspannenergiesignale zur Anpassung an reale Hysteresen unterschiedlich vornimmt. Dadurch ist es beispielsweise möglich, die Berechnung des jedem Energieverteiler zugeteilten Zuspannenergiesignals auf die besondere Charakteristik der jedem Energieverteiler zugeordneten Bremse oder Bremsen abzustimmen. Diese Ausgestaltung ist beispielsweise dann nützlich, wenn in einer Bremsanlage unterschiedliche Bremsen, beispielsweise mit unterschiedlichen Zuspanneinrichtungen oder unterschiedlichen Bremsapparaten, verwendet werden. Zweckmäßigerweise ist in diesem Fall die Zahl der Kanäle der Regelelektronik (4) an die Zahl der vorhandenen Energieverteiler angepaßt.

Die zuletzt erwähnte Fortbildung der Regelelektronik (4) mit Aufteilung in Kanäle ermöglicht auch, in jedem Kanal die etwa in die Berechnung der Zuspannenergie (ZS) eingehenden variablen Größen, wie eine solche beispielsweise von dem Sensor (5) erfaßt wird, unterschiedlich zu wichten. Damit lassen sich die Bremskraftverteilung zwischen den Bremsen und damit deren Anteile an der Bremswerterzeugung variieren. Diese Möglichkeit ist in der Fahrzeugtechnik von Bedeutung, beispielsweise zur Erzielung gleicher Kraftschlußausnutzung zwischen Rad und Straße an allen Rädern. Beispielsweise kann bei achsweiser Bremskreisaufteilung in den einem Bremskreis zugeordneten Kanälen der oben erläuterte, das Gewicht kennzeichnende Koeffizient (F) als fest und in einem oder mehreren anderen Bremskreisen zugeordneten Kanälen nach Maßgabe des Signals des Sensors (5) variabel angesetzt werden.

Abschließend sei darauf hingewiesen, daß sich der Schutzbereich der vorliegenden Erfindung nicht in dem Ausführungsbeispiel mit seinen erwähnten Ausgestaltungen und Fortbildungen erschöpft, sondern alle Ausgestaltungen erfaßt, deren Merkmale sich den Patentansprüchen unterordnen.

## Patentansprüche

1. Verfahren zur Einstellung eines Bremswertes (B) auf einen Soll-Bremswert BS,
   worin der Bremswert (B) von einer Bremsanlage mit wenigstens einer Bremse (12,13) bei Zuführung von Zuspannenergie (Z) zu der Bremse (12, 13) erzeugt wird,
   wobei der Bremswert (B) als Funktion der Zuspannenergie (Z) für die Bremsbetätigung einerseits und das Bremslösen andererseits nach unterschiedlichen Kennlinien (U, T) verläuft, deren Differenz für einen gegebenen Bremswert (B) die Hysterese (Hy) der Bremsanlage ist,
   dadurch gekennzeichnet,
   daß, wenn nach einem Anstieg der Zuspannenergie (Z) der Ist-Bremswert BI gegenüber dem Soll-Bremswert BS eine Abweichung in Richtung höherer Bremswerte (B) zeigt, die vorhandene Zuspannenergie ZS um einen Wert (HyS+W) gemindert wird, der aus der dem Soll-Bremswert BS zugeordneten Hysterese HyS und einer als Wirkabfall W zu bezeichnenden Größe besteht.

2. Verfahren nach Anspruch 1,
   dadurch gekennzeichnet,
   daß auf Vorliegen einer Abweichung (BI-BS) erst ab einem vorbestimmten Grenzwert L derselben erkannt wird.

3. Verfahren nach einem der vorhergehenden Ansprüche,
   dadurch gekennzeichnet,
   daß der Wirkabfall W wenigstens von der Größe der Abweichung (BI-BS) abhängt.

4. Verfahren nach einem der vorhergehenden Ansprüche,
   dadurch gekennzeichnet,
   daß die Zuspannenergie (Z), wenn nach ihrer Minderung eine Restabweichung (BIE1-BS) noch vorhanden ist, in Stufen bis zur Einstellung des Soll-Bremswertes BS weiter gemindert wird.

5. Verfahren nach einem der Ansprüche 1 - 4,
   dadurch gekennzeichnet,
   daß, wenn bei einer Bremsbetätigung in einem Bremsvorgang nach der Minderung der vorhandenen Zuspannenergie ZS eine Restabweichung (BIE1-BS) noch vorhanden ist, in dem nächsten Bremsvorgang, in dem eine Abweichung (BI-BS) der ursprünglichen Art auftritt, eine neue Hysterese HyG angesetzt wird, die sich aus einer Vergrößerung der dem Soll-Bremswert BS zugeordneten Hysterese HyS um einen Korrekturwert G ergibt.

6. Verfahren nach Anspruch 5,
   dadurch gekennzeichnet,
   daß, wenn in dem genannten nächsten Bremsvorgang nach der Minderung der vorhandenen Zuspannenergie ZS unter Ansatz der neuen Hysterese HyG noch eine Restabweichung (BIE1-BS) vorhanden ist, in wenigstens einem weiteren Bremsvorgang, in dem eine Abweichung (BI-BS) der ursprünglichen Art auftritt, die Anwendung des Korrekturwertes G wiederholt wird, bis die Minderung unter Ansatz der jeweils neuen Hysterese HyG zur Einstellung des jeweiligen Soll-Bremswertes BS führt.

7. Verfahren nach einem der Ansprüche 1 - 4,
   dadurch gekennzeichnet,
   daß, wenn bei einer Bremsbetätigung in einem Bremsvorgang nach der Minderung der vorhandenen Zuspannenergie ZS eine Abweichung (BS-BIE2) des Ist-Bremswertes BIE2 von dem Soll-Bremswert BS in Richtung geringerer Bremswerte (B) vorhanden ist, in dem nächsten Bremsvorgang, in dem eine Abweichung (BI-BS) der ursprünglichen Art auftritt, eine neue Hysterese HyV angesetzt wird, die sich aus einer Verringerung der dem Soll-Bremswert BS zugeordneten Hysterese HyS um einen Korrekturwert V ergibt.

**8.** Verfahren nach Anspruch 7,
   <u>dadurch gekennzeichnet,</u>
   daß, wenn in dem genannten nächsten Bremsvorgang nach der Minderung der vorhandenen Zuspannenergie ZS unter Ansatz der neuen Hysterese HyV der Ist-Bremswert BIE2 von dem Soll-Bremswert BS in Richtung geringerer Bremswerte (B) abweicht, in wenigstens einem weiteren Bremsvorgang, in dem eine Abweichung (BI-BS) der ursprünglichen Art auftritt, die Anwendung des Korrekturwertes V wiederholt wird, bis die Minderung unter Ansatz der jeweils neuen Hysterese HyV zur Einstellung des Soll-Bremswertes führt.

**9.** Bremsanlage zur Durchführung des Verfahrens nach Anspruch 1,
   die außer der wenigstens einen Bremse (12, 13) einen ein elektrisches Soll-Bremswertsignal abgehenden Bremswertgeber (2),
   einen ein elektrisches Ist-Bremswertsignal abgebenden Bremswertsensor (1),
   einen elektrisch gesteuerten Energieverteiler (11) und
   eine eingangsseitig mit dem Bremswertgeber (2) sowie dem Bremswertsensor (1) und ausgangsseitig mit einem Steuerteil (14) des Energieverteilers (11) verbundene Regelelektronik (4) aufweist,
   welche das Ist-Bremswertsignal mit dem Soll-Bremswertsignal vergleicht und ein von diesem Vergleich wenigstens mitbestimmtes Zuspannenergiesignal an den Steuerteil (14) des Energieverteilers (11) abgibt,
   <u>dadurch gekennzeichnet,</u>
   daß in der Regelelektronik (4) die Hysterese (Hy) als Funktion des Bremswertes (B) gespeichert ist, und
   daß die Regelelektronik (4) derart ausgebildet ist, daß sie, wenn sie nach einem Anstieg des Zuspannenergiesignals eine Abweichung des Ist-Bremswertes BI von dem Soll-Bremswert BS in Richtung höherer Bremswerte (B) feststellt, das Zuspannenergiesignal um einen Wert mindert, der zu der Minderung der vorhandenen Zuspannenergie ZS um den aus der dem Soll-Bremswert BS zugeordneten Hysterese HyS und der als Wirkabfall W zu bezeichnenden Größe bestehenden Wert (HyS+W) führt.

**10.** Bremsanlage nach Anspruch 9,
   <u>dadurch gekennzeichnet,</u>
   daß die Regelelektronik (4) derart ausgebildet ist, daß sie, wenn bei einer Bremsbetätigung in einem Bremsvorgang nach der Minderung des Zuspannenergiesignals eine Restabweichung (BIE1-BS) noch vorhanden ist, in dem nächsten Bremsvorgang, in dem eine Abweichung (BI-BS) auftritt, das Zuspannenergiesignal um einen dem Ansatz einer um einen Korrekturwert G vergrößerten Hysterese HyG entsprechenden Wert mindert, und diese Minderung in weiteren Bremsvorgängen, die einem Bremsvorgang folgen, in dem eine Restabweichung aufgetreten ist, wiederholt, bis die Minderung zur Einstellung des jeweiligen Soll-Bremswertes BS führt.

**11.** Bremsanlage nach einem der Ansprüche 9 oder 10,
   <u>dadurch gekennzeichnet,</u>
   daß die Regelelektronik (4) derart ausgebildet ist, daß sie, wenn bei einer Bremsbetätigung in einem Bremsvorgang nach der Minderung des Zuspannenergiesignals eine Abweichung (BS-BIE2) des Ist-Bremswertes BIE2 von dem Soll-Bremswert BS in Richtung geringerer Bremswerte (B) vorhanden ist, in dem nächsten Bremsvorgang, in dem eine Abweichung (BI-BS) der ursprünglichen Art auftritt, das Zuspannenergiesignal um einen dem Ansatz einer um einen Korrekturwert V verkleinerten Hysterese HyV entsprechenden Wert mindert, und diese Minderung in weiteren Bremsvorgängen, die einem Bremsvorgang folgen, in dem eine derartige Abweichung (BS-BIE2) aufgetreten ist, wiederholt, bis die Minderung zur Einstellung des jeweiligen Soll-Bremswertes BS führt.

**Claims**

**1.** A method for adjusting a brake value (B) to a desired brake value BS,
   in which the brake value (B) is produced by a brake system having at least one brake (12, 13) on admission of application energy (Z) to the brake (12, 13),
   wherein the brake value (B), as a function of the application energy (Z), runs for the brake actuation on the one hand and the brake release on the other hand according to different characteristics (U, T), the difference of which for a given brake value (B) is the hysteresis (Hy) of the brake system,
   characterized in that
   if, after an increase in the application energy (Z), the actual brake value BI shows a deviation with respect to the desired brake value BS in the direction of higher brake values (B), the existing application energy ZS is decreased by a value (HyS+W) which consists of the hysteresis Hys associated with the desired brake value BS and a variable to be denoted as the effective drop W.

2. A method according to claim 1, characterized in that the presence of a deviation (BI-BS) is recognized only from a predetermined threshold value L of the same onwards.

3. A method according to one of the preceding claims, characterized in that the effective drop W depends at least on the magnitude of the deviation (BI-BS).

4. A method according to one of the preceding claims, characterized in that the application energy (Z), whenever a residual deviation (BIE1-BS) is still present after decrease thereof, is further decreased in steps until the desired brake value BS is set.

5. A method according to one of claims 1 to 4, characterized in that if, on actuation of the brake in a braking operation after the decrease in the existing application energy ZS, a residual deviation (BIE1-BS) is still present, in the next braking operation in which a deviation (BI-BS) of the original kind occurs there is specified a new hysteresis HyG, which derives from an increase by a correction value G in the hysteresis HyS associated with the desired brake value BS.

6. A method according to claim 5, characterized in that if, in the said next braking operation after the decrease in the existing application energy ZS using the new hysteresis HyG, a residual deviation (BIE1-BS) is still present, in at least one further braking operation, in which a deviation (BI-BS) of the original kind occurs, the use of the correction value G is repeated until the decrease using the new hysteresis HyG in each case results in setting of the respective desired brake value BS.

7. A method according to one of claims 1 to 4, characterized in that if, on actuation of the brake in a braking operation after the decrease in the existing application energy ZS, there is a deviation (BS-BIE2) of the actual brake value BIE2 from the desired brake value BS in the direction of smaller brake values (B), in the next braking operation in which a deviation (BI-BS) of the original kind occurs there is specified a new hysteresis HyV, which derives from a reduction by a correction value V of the hysteresis HyS associated with the desired brake value BS.

8. A method according to claim 7, characterized in that if, in the said next braking operation after the decrease in the existing application energy ZS using the new hysteresis HyV, the actual brake value BIE2 deviates from the desired brake value BS in the direction of smaller brake values (B), in at least one further braking operation in which a deviation (BI-BS) of the original kind occurs the use of the correction value V is repeated until the decrease using the new hysteresis HyV in each case results in setting of the respective desired brake value.

9. A brake system for implementing the method according to claim 1,
which, in addition to the at least one brake (12, 13), comprises
a brake value transducer (2) supplying an electrical desired brake value signal,
a brake value sensor (1) supplying an electrical actual brake value signal,
an electrically controlled energy distributor (11) and control electronics (4) connected on the input side to the brake value transducer (2) and the brake value sensor (1) and on the output side to a control part (14) of the energy distributor (11), which control electronics compare the actual brake value signal with the desired brake value signal and supply to the control part (14) of the energy distributor (11) an application energy signal at least co-determined by that comparison,
characterized in that
the hysteresis (Hy) as a function of the brake value (B) is stored in the control electronics (4), and the control electronics (4) are designed so that if, after a rise in the application energy signal, they ascertain a deviation of the actual brake value BI from the desired brake value BS in the direction of higher brake values (B), they decrease the application energy signal by a value which results in a decrease in the existing application energy ZS by the value (HyS+W) comprising the hysteresis HyS associated with the desired brake value BS and the variable to be denoted as effective drop W.

10. A brake system according to claim 9, characterized in that the control electronics (4) are designed so that if, on actuation of the brake in a braking operation after the decrease in the application energy signal, a residual deviation (BIE1-BS) is still present, in the next braking operation in which a deviation (BI-BS) occurs they decrease the application energy signal by a value corresponding to the use of a hysteresis HyG enlarged by a correction value G, and repeat this decrease in further braking operations that follow a braking operation in which a residual deviation has appeared, until the decrease results in setting of the respective desired brake value BS.

**11.** A brake system according to one of claims 9 or 10, characterized in that the control electronics (4) are designed so that if, on actuation of the brake in a braking operation after the decrease in the application energy signal, there is a deviation (BS-BIE2) of the actual brake value BIE2 from the desired brake value BS in the direction of smaller brake values (B), in the next braking operation in which a deviation (BI-BS) of the original kind occurs they decrease the application energy signal by a value corresponding to the use of a hysteresis HyV reduced by a correction value V, and repeat this decrease in further braking operations that follow a braking operation in which such a deviation (BS-BIE2) has occurred, until the decrease results in setting of the respective desired brake value BS.

**Revendications**

**1.** Procédé pour l'ajustement d'une valeur de freinage (B) à une valeur de freinage à atteindre BS,

dans lequel la valeur de freinage (B) d'une installation de freinage, comprenant au moins un frein (12, 13), sera engendrée lors d'amenée d'énergie d'application de frein (Z) au frein (12, 13),

la valeur de freinage (B) variant dans le temps comme fonction de l'énergie d'application de frein (Z) pour l'actionnement de freinage, d'une part, et la libération de freinage, d'autre part, selon des lignes caractéristiques (U, T) différentes, dont la différence pour une valeur de freinage (B) donnée est l'hystérésis (Hy) de l'installation de freinage,

caractérisé en ce que,

lorsqu'après un accroissement de l'énergie d'application de frein (Z), la valeur de freinage actuelle BI montre un écart vis-à-vis de la valeur de freinage à atteindre BS en direction de valeur de freinage (B) plus élevées, l'énergie d'application de frein ZS présente sera diminuée d'une valeur (HyS + W), qui est constituée à partir de l'hystérésis HyS associée à la valeur de freinage à atteindre BS et d'une grandeur à désigner comme chute d'efficacité W.

**2.** Procédé selon la revendication 1,

caractérisé en ce,

que la présence d'un écart (BI - BS) ne sera reconnue qu'à partir d'une valeur limite L prédéterminée de celui-ci.

**3.** Procédé selon une des précédentes revendications,

caractérisé en ce,

que la chute d'efficacité W dépend au moins de la grandeur de l'écart (BI - BS).

**4.** Procédé selon une des précédentes revendications,

caractérisé en ce,

que l'énergie d'application de frein (Z), lorsqu'après sa diminution un écart résiduel (BIE1 - BS) est encore présent, sera diminuée de plus par étapes jusqu'à l'ajustement de la valeur de freinage à atteindre BS.

**5.** Procédé selon une des revendications 1 à 4,

caractérisé en ce,

que, lorsque, lors d'un actionnement de freinage dans une opération de freinage, après la diminution de l'énergie d'application de frein ZS présente, un écart résiduel (BIE1 - BS) est encore présent, dans l'opération de freinage suivante, dans laquelle un écart (BI - BS) du type à l'origine survient, une nouvelle hystérésis HyG sera formée, qui résulte d'un agrandissement de l'hystérésis HyS associée à la valeur de freinage à atteindre BS d'une valeur de correction G.

**6.** Procédé selon la revendication 5,

caractérisé en ce,

que, lorsque, dans l'opération de freinage suivante citée, après la diminution de l'énergie d'application de frein ZS présente, avec formation de la nouvelle hystérésis HyG, un écart résiduel (BIE1 - BS) est encore présent, en au moins une autre opération de freinage, dans laquelle un écart (BI - BS) du type à l'origine survient, l'emploi de la valeur de correction G sera répété, jusqu'à ce que la diminution, avec emploi chaque fois de la nouvelle hystérésis HyG, conduise à l'ajustement, chaque fois, de la valeur de freinage à atteindre BS.

**7.** Procédé selon une des revendications 1 à 4,

caractérisé en ce,

que, lorsque, lors d'un actionnement de freinage dans une opération de freinage, après la diminution de l'énergie d'application de frein ZS présente, un écart (BS - BIE2) de la valeur de freinage actuelle BIE2 par rapport à la valeur de freinage à atteindre BS, en direction de valeurs de freinage (B) plus faibles, est présent, dans l'opération de freinage suivante, dans laquelle un écart (BI - BS) du type à l'origine survient, une nouvelle hystérésis HyV sera formée, qui résulte d'une réduction de l'hystérésis HyS associée à la valeur de freinage à atteindre BS d'une valeur de correction V.

8. Procédé selon la revendication 7,
caractérisé en ce,
que, lorsque, dans l'opération de freinage suivante citée, après la diminution de l'énergie d'application de frein ZS présente, avec formation de la nouvelle hystérésis HyV, la valeur de freinage actuelle BIE2 s'écarte de la valeur de freinage à atteindre BS, en direction de valeurs de freinage (B) plus faibles, dans au moins une autre opération de freinage, dans laquelle un écart (BI - BS) du type à l'origine survient, l'emploi de la valeur de correction V sera répété, jusqu'à ce que la diminution, avec emploi, chaque fois, de la nouvelle hystérésis HyV, conduise à l'ajustement de la valeur de freinage à atteindre BS.

9. Installation de freinage pour la mise en oeuvre du procédé selon la revendication 1,
qui, en dehors d'au moins un frein (12, 13), présente : un émetteur de valeur de freinage (2) délivrant un signal de valeur de freinage à atteindre électrique,
un capteur de valeur de freinage (1) délivrant un signal de valeur de freinage actuel électrique,
un distributeur d'énergie (11) commandé électriquement, et
une électronique de régulation (4) reliée, du côté de l'entrée, avec l'émetteur de valeur de freinage (2) ainsi qu'avec le capteur de valeur de freinage (1), et, du côté de la sortie, avec une partie de commande (14) du distributeur d'énergie (11),
laquelle électronique de régulation (4) compare le signal de valeur de freinage actuel avec le signal de valeur de freinage à atteindre, et, délivre, à partir de cette comparaison, au moins un signal d'énergie d'application de frein codéterminé à la partie de commande (14) du distributeur d'énergie (11),
caractérisé en ce,
que, dans l'électronique de régulation (4), l'hystérésis (Hy) est mise en mémoire comme une fonction de la valeur de freinage (B), et en ce que l'électronique de régulation (4) est constituée de telle sorte, que, lorsque, après un accroissement du signal d'énergie d'application de frein, elle constate un écart de la valeur de freinage actuelle BI par rapport à la valeur de freinage à atteindre BS, en direction de valeurs de freinage (B) plus élevées, elle diminue le signal d'énergie d'application de frein d'une valeur, qui conduit à la diminution de l'énergie d'application de frein ZS présente de la valeur (HyS + W), constituée de l'hystérésis HyS associée à la valeur de freinage à atteindre BS et de la grandeur W à désigner comme chute d'efficacité.

10. Installation de freinage selon la revendication 9,
caractérisé en ce,
que l'électronique de régulation (4) est constituée de telle sorte, que, lorsque lors d'un actionnement de freinage dans une opération de freinage, après la diminution du signal d'énergie d'application de frein, un écart résiduel (BIE1 - BS) est encore présent, dans l'opération de freinage suivante, dans laquelle un écart (BI - BS) survient, elle diminue le signal d'énergie d'application de frein d'une valeur correspondant à l'application d'une hystérésis HyG agrandie d'une valeur de correction G, et répète cette diminution dans d'autres opérations de freinage, qui suivent une opération de freinage, dans laquelle un écart résiduel est survenu, jusqu'à ce que la diminution conduise à l'ajustement, chaque fois, de la valeur de freinage à atteindre BS.

11. Installation de freinage selon une des revendications 9 ou 10,
caractérisé en ce,
que l'électronique de régulation (4) est constituée de telle sorte, que, lorsque lors d'un actionnement de freinage dans une opération de freinage, après la diminution du signal d'énergie d'application de frein, un écart (BS - BIE2) de la valeur de freinage actuelle BIE2 par rapport à la valeur de freinage à atteindre BS, en direction de valeurs de freinage (B) plus faibles, est présent, dans l'opération de freinage suivante, dans laquelle un écart (BI - BS) du type à l'origine survient, elle diminue le signal d'énergie d'application de frein d'une valeur correspondant à l'application d'un hystérésis HyV rapetissée d'une valeur de correction V, et répète cette diminution dans d'autres opérations de freinage, qui suivent une opération de freinage, dans laquelle un écart (BS - BIE2) de ce type est survenu, jusqu'à ce que la diminution conduise à l'ajustement, chaque fois, de la valeur de freinage à atteindre BS.

FIG.1

FIG.2

FIG.3